# EUROPÄISCHE PATENTSCHRIFT

(11) **EP 0 817 668 B1**
(45) Veröffentlichungstag und Bekanntmachung des Hinweises auf die Patenterteilung: **06.12.2000**
(21) Anmeldenummer: 96907393.1
(22) Anmeldetag: 08.03.1996
(51) Int. Cl.: B01D 35/26, B01D 35/147, B01D 35/153, B01D 35/12

(54) **NEBENSTROMFILTERAGGREGAT**
BYPASS-MOUNTED FILTER ASSEMBLY
ENSEMBLE FILTRE MONTE EN DERIVATION

(30) Priorität: 29.03.1995 DE 19511450
(43) Veröffentlichungstag der Anmeldung: 14.01.1998
(73) Patentinhaber: ARGO GmbH für Fluidtechnik, 76703 Kraichtal-Menzingen (DE)
(72) Erfinder: MÜNKEL, Karlheinz, D-75038 Oberderdingen-Flehingen (DE)
(74) Vertreter: Hoeger, Stellrecht & Partner
(86) Internationale Anmeldenummer: EP9600996
(87) Internationale Veröffentlichungsnummer: WO9630104

(56) Entgegenhaltungen:
- DE-A- 3 122 047
- DE-A- 3 903 675
- FR-A- 2 125 952

## Beschreibung

Die Erfindung betrifft ein Nebenstromfilteraggregat, insbesondere zur Filterung von Hydraulikölvorräten im Nebenstrom, mit einer motorisch angetriebenen Pumpe und einem fest montierten, mit einem Deckel verschließbaren Filtergehäuse, welches ein auswechselbares Filterelement beinhaltet, wobei der Antrieb der Pumpe, die Pumpe und das Filtergehäuse koaxial und in vertikaler Richtung angeordnet sind, so daß das mit dem Deckel verschließbare Ende des Filtergehäuses nach oben weist, und wobei das Filtergehäuse direkt mit der Pumpe verbunden ist.

Die eingangs definierten Nebenstromfilteraggregate sind aus der FR-A-2 125 952 bekannt. Sie werden in einer Vielzahl von Fällen zur Reinigung von Hydraulikölvorräten bei Hydraulikanlagen eingesetzt, um außerhalb des Arbeitsstroms der Hydraulikflüssigkeit den Hydraulikflüssigkeitsvorrat zu reinigen. Dabei wird die Hydraulikflüssigkeit, insbesondere das Hydrauliköl, dem Ölvorrat entnommen, durch das Nebenstromfilteraggregat gefördert, gefiltert und als Reinöl in den Hydraulikvorrat wieder zurückgegeben.

Des weiteren können diese Nebenstromfilteraggregate zum Umpumpen von Hydraulikflüssigkeiten verwendet werden (z.B. Befüllen eines Hydrauliktanks aus einem Faß).

Neben der oben dargestellten Technologie mit auswechselbarem Filterelement hat sich eine zweite Form der Nebenstromfilteraggregate etabliert, die mit sogenannten Spin-on-Filtern arbeiten, bei denen das Filterelement und das Filtergehäuse eine Einheit bilden.

Bei beiden Technologien ist jedoch der Filterwechsel unbefriedigend gelöst, indem entweder die Möglichkeit besteht, daß am Filterelement abgesetzte Schmutzpartikel wieder in die Reinölseite gelangen können, oder aber indem große Anteile an Hydraulikflüssigkeit, sowohl vom reinölseitigen als auch vom schmutzölseitigen Teil beim Filterwechsel verworfen werden müssen. In beiden Fällen ist die Handhabung der Filterelemente, seien es nun die Filterelemente als solche, die auswechselbar sind, oder die aus Filterelement und Filtergehäuse bestehende Spin-on-Einheit, arbeitsaufwendig und häufig genug mit Ölverschmutzungen in der Umgebung behaftet.

Aufgabe der vorliegenden Erfindung ist es, ein Nebenstromfilteraggregat vorzustellen, bei dem der Wechsel der Filterelemente bzw. die Erneuerung des Filters in einfacher Weise und ohne Verschmutzungsrisiko für die Reinölseite vorgenommen werden kann.

Diese Aufgabe wird bei dem eingangs beschriebenen Nebenstromfilteraggregat erfindungsgemäß dadurch gelöst, daß das Filterelement von innen nach außen durchströmbar ist und eine Rückhaltevorrichtung für das im Filterelement beim Wechsel enthaltene Schmutzöl umfaßt und daß das Filtergehäuse ein Aufnahmegefäß für das Reinöl beim Wechsel des Filterelementes bildet.

Bei diesem Nebenstromfilteraggregat braucht lediglich der das Filtergehäuse verschließende Deckel gelöst werden, das Filterelement mit dem im Filterelement enthaltenden Schmutzöl herausgenommen und gegen ein neues Filterelement ausgetauscht werden. Das Reinöl bleibt dabei in dem ein Aufnahmegefäß bildenden Filtergehäuse, während das Schmutzöl, das aufgrund der Rückhaltevorrichtung noch im Filterelement verblieben ist, mit diesem zusammen verworfen wird. Damit wird vorgebeugt, daß mit dem Schmutzöl zusammen am Filterelement abgelagerte Verschmutzungen wieder in den Hydraulikölvorrat gelangen.

Die Art des Antriebsaggregats für das Nebenstromfilteraggregat kann frei gewählt werden, wobei allerdings pumpenseitig bevorzugt Zahnradpumpen verwendet werden, vorzugsweise Innenzahnradpumpen oder alternativ auch Flügelzellenpumpen.

Bei einer besonders bevorzugten Ausführungsform der Erfindung wird das hydraulische Förderelement direkt auf der Motorwelle des Antriebs, d.h. also ohne Kupplung, befestigt, so daß sich hier eine bauliche Vereinfachung der Konstruktion ergibt.

Weiterhin bevorzugt ist, daß das Pumpengehäuse der Pumpe einen Ventilblock integriert enthält, was erneut die Zahl der Bauteile vermindert und die Bauhöhe des Nebenstromfilteraggregats minimiert.

Besonders bevorzugt sind Konstruktionen des Nebenstromfilteraggregats, bei denen das Pumpengehäuse in den Filtergehäuseboden integriert ist. Der Filtergehäuseboden bildet dabei den Pumpenblock, der gegebenenfalls den Ventilblock integriert enthält, so daß ein gesondertes Bauteil zwischen dem Antrieb und dem Filtergehäuse entfällt. Der das Pumpengehäuse bildende Filtergehäuseboden nimmt dann das hydraulische Förderelement, das vorzugsweise direkt auf der Motorwelle sitzt, auf, wobei der motorseitige Flansch den Abschluß des Pumpengehäuses bildet.

Alternativ kann am Befestigungsflansch des Antriebsmotors das Pumpengehäuse bzw. der Pumpenblock angeordnet und ausgebildet sein, wobei dann der Filtergehäuseboden den Abschluß der Pumpenkammer bildet. Im Falle, daß die Pumpenkammer im Filtergehäuseboden integriert ist, bedingt dies eine sehr genaue Bearbeitung des Filtergehäusebodens.

Ist die Pumpenkammer bzw. der Pumpenblock im Motorflansch ausgebildet, und der Filtergehäuseboden bildet den Abschluß der Pumpenkammer, dann muß der Motorflansch genau gearbeitet werden, insbesondere im Hinblick auf den Dichtungssitz, der in der Regel ein Radialwellendichtring sein wird, der die Pumpenkammer gegenüber der Motorwelle abdichtet.

Bevorzugt wird das Filtergehäuse direkt an einem Flansch des Antriebs befestigt sein. Dies insbesondere dann, wenn der Motorflansch einerseits oder der Filtergehäuseboden andererseits den jeweiligen Abschluß der Pumpenkammer bildet.

Alternativ kann das Pumpengehäuse in einem gesonderten Pumpenblock integriert sein, der zwischen den Flansch des Antriebs und den Filtergehäuseboden montiert wird. Hierbei können dann der Motorflansch einerseits und/oder der Filtergehäuseboden andererseits jeweils in Axialrichtung einen Abschluß des Pumpengehäuses bilden.

Bei einer bevorzugten Ausführungsform der Erfindung ist vorgesehen, daß der Filtergehäuseboden, unabhängig von seiner oben diskutierten Funktion, einstückig mit dem Filtergehäuse ausgebildet ist. Insbesondere hat sich hier bewährt, wenn das Filtergehäuse ein Fließpreßteil aus Aluminium ist. Eine sehr vereinfachte Möglichkeit, um das restliche Schmutzöl im Filterelement zurückzuhalten, besteht darin, ein Ventil im Boden des Filterelementes vorzusehen, das im Betrieb des Nebenstromfilteraggregats öffnet und das Schmutzöl in das Filterelement einfließen läßt, beim Wechsel des Filterelementes jedoch schließt und so das restliche Schmutzöl samt den im Filterelement zurückgehaltenen Verschmutzungen im Filterelement zurückhält.

Alternativ kann vorgesehen sein, daß der Schmutzölraum des Filterelementes über eine Steigleitung mit Schmutzöl beschickt wird, die ein Teil des Filterelementes bildet und mit diesem ausgewechselt wird. Dadurch wird verhindert, daß Schmutzöl von der Schmutzölseite des Filterelementes zusammen mit im Filterelement zurückgehaltenen Verschmutzungen in den Hydraulikvorrat beim Wechsel des Filterelementes zurückfließen kann.

Um zu vermeiden, daß beim Betrieb des Nebenstromfilteraggregats oder aber beim Filterelement im Falle einer Sättigung des Filters ein zu hoher Druck aufgebaut wird und Teile des Nebenstromfilteraggregats beschädigt werden, wird ein By-Pass-Ventil vorgesehen.

Das By-Pass-Ventil öffnet bei einem vorgegebenen Druck selbständig und verbindet dann die Druckseite der Pumpe mit der Saugseite, so daß das Öl zirkuliert. Durch diese Anordnung wird verhindert, daß Schmutzöl ungefiltert in den Hydraulikvorrat gelangt. Besondere Bedeutung erhält diese Anordnung beim Umpumpen von Hydraulikflüssigkeit aus einem externen Behältnis, das in der Regel Schmutz enthält, in den Hydraulikvorrat eines Hydrauliksystems.

Bevorzugt wird die erfindungsgemäß ausgestaltete By-Pass-Leitung im Filtergehäuseboden angeordnet sein.

Der das Filtergehäuse verschließende Deckel wird bevorzugt ein in das Gehäuse beim Verschließen eintauchender Deckel sein. Damit wird besonders wirksam beim Wechsel des Filterelementes vermieden, daß das im Gehäuse enthaltene Öl austreten und zu einer Verschmutzung der Außenseite des Nebenstromfilteraggregats führen kann.

Darüber hinaus kann der Deckel unabhängig von seiner Ausgestaltung mit einem Halteelement für das Filterelement versehen sein, gegenüber dem das Filterelement selbst vorzugsweise drehbar gehalten ist. Damit läßt sich zusammen mit dem Filter und ohne jegliches Handwerkszeug das Filterelement aus dem Filtergehäuse entnehmen, ohne daß das Personal besondere Vorkehrungen betreffend Verschmutzungen vornehmen muß.

Bei einer besonders bevorzugten Ausführungsform der Erfindung liegt das Halteelement abdichtend am Filterelement an und verschließt dieses an seinem der Schmutzöleingangsseite gegenüberliegenden Ende abdichtend, so daß das noch im Filterelement enthaltende Schmutzöl beim Wechsel des Filterelementes aus diesem nicht austreten kann.

Bevorzugt wird das Halteelement so ausgestaltet, daß es in eine Verengung des Filtergehäuses einrückbar ist.

Eine weitere vorteilhafte Ausbildung des Deckels liegt in einer Bombierung desselben, was beispielsweise den Vorteil hat, daß innerhalb der dadurch entstehenden, von außen zugänglichen Ausnehmung oder einem solchen Rücksprung ein integrierter Griff anordenbar ist.

Besonders vorteilhaft im Hinblick auf die Verschmutzungsfreiheit ist ein Deckel, welcher ein Außengewinde umfaßt, welches in ein komplementäres Innengewinde des Filtergehäuses einschraubbar ist.

Um zu verhindern, daß beim Einsetzen eines neuen Filterelementes in das Filtergehäuse Öl durch Überschwappen aus dem Filtergehäuse verlorengeht, wird vorzugsweise vorgesehen, daß der Deckel oder das Filtergehäuse ein Sperrelement, beispielsweise einen Gewindeabschnitt, umfassen, welches lediglich ein verlangsamtes Zurücklegen des letzten Teils des Schließweges des Deckels erlaubt. Dadurch wird die letzte Phase des Verschließens und Einsetzens des Filterelements in das Filtergehäuse so verlangsamt, daß kein Aufspritzen von Hydrauliköl, das nach dem Entfernen eines verbrauchten Filterelementes im Filtergehäuse zurückgeblieben ist, möglich ist.

Eine weitere bevorzugte Ausführungsform der Erfindung sieht vor, daß das Filterelement ein gering federbelastetes Ventil umfaßt, welches bei geringem Staudruck auf der Reinölseite beim Einsetzen des Filterelementes öffnet und einen Durchtritt von der Reinölseite des Filterelementes zu seiner Schmutzölseite schafft. Dies führt dazu, daß das beim Auswechseln eines verbrauchten Filterelementes im Filtergehäuse zurückbleibende Reinöl beim Einsetzen des neuen Filterelementes auch den leeren Raum innerhalb des neuen Filterelementes nutzen kann und so nur zu einem deutlich verringerten Anstieg der Füllhöhe des Reinöls in dem Filtergehäuse beim Einsetzen des neuen Filterelementes führt. Damit wird in einer alternativen Weise zu der vorhergehenden Lösung ein Überschwappen des Reinöls aus dem noch offenen bzw. noch nicht ganz geschlossenen Filtergehäuse vermieden.

Bei einer weiter bevorzugten Ausführungsform umfaßt die Druckleitung ein Rückschlagventil, welches vorzugsweise im Filtergehäuseboden integriert ist. Führt die Druckleitung zu einem Hydraulikbehältnis (= Tank), der höher angeordnet ist als das Nebenstromfilteraggregat, verhindert das in der Druckleitung eingebaute Rückschlagventil, daß beim Elementwechsel Hydraulikflüssigkeit aus dem höher angeordneten Behältnis in den Behälter des Nebenstromfilteraggregates zurückfließen und über den dann geöffneten Deckel austreten kann.

Zur Überprüfung der Filterbelegung bzw. Filterauslastung wird im Filtergehäuseboden vorzugsweise ein Anschluß für ein Manometer vorgesehen, welches mit der Schmutzölseite in Fließverbindung steht. An dem Manometer läßt sich der Druck auf der Druckseite ablesen, der immer dann merklich ansteigt, wenn das Filter in seiner Kapazität ausgeschöpft ist. Somit liefert das Manometer einen Hinweis auf den Verschmutungsgrad des Filterelements. Da bei den standardmäßig verwendeten austauschbaren Filterelementen die Betriebsdrücke, die normalerweise zu erwarten sind, sowie die bei einer Verschmutzung auftretenden Druckanstiege bekannt sind, kann auf dem Manometer gleich eine Markierung vorgesehen werden, die dem Bedienpersonal einen direkten Hinweis gibt, daß das Filterelement verschmutzt und damit auszuwechseln ist.

Alternativ oder ergänzend hierzu kann ein Differenzdruckschalter vorhanden sein, welcher bei Überschreiten eines vorgegebenen Differenzdruckes zwischen der Anström- und der Abströmseite des Filters die Druckdifferenz mißt und beim Überschreiten einer vorgegebenen Druckdifferenz elektrisches Signal abgibt, das unter anderem dazu benutzt werden kann, das Nebenstromfilteraggregat still zu setzen.

Um die einzelnen Elemente gegeneinander abzudichten und insbesondere um die Schmutzölfilterseite von der Reinölfilterseite abzudichten, werden bevorzugt Radialdichtungen verwendet, beispielsweise bei der Abdichtung des Filterelements gegen das Filtergehäuse und/oder bei der Abdichtung des Deckels gegenüber dem Filtergehäuse. Die Radialdichtungen haben den Vorteil, daß ein dichtender Kontakt zwischen Filterelement und Filtergehäuse bzw. Deckel und Filtergehäuse in unterschiedlicher Einschraubhöhe erzielt werden kann, so daß die Genauigkeit der Fertigung bezüglich des dicht schließenden Sitzes weniger kritisch ist.

Diese und weitere Vorteile der Erfindung werden im folgenden anhand der Zeichnung noch näher erläutert. Es zeigen im einzelnen:
- Figur 1: eine Schnittansicht eines erfindungsgemäßen Nebenstromfilteraggregats;
- Figur la: eine Draufsicht auf eine Filterelementhalterung;
- Figur 2: eine Draufsicht auf das Nebenstromfilteraggregat von Figur 1;
- Figur 3: eine vereinfachte Schnittansicht längs Linie III-III in Figur 1;
- Figur 4: ein Detail einer Rücklaufverbindung;
- Figur 5: eine Schnittansicht einer alternativen Ausführungsform der Erfindung;
- Figur 6: eine weitere Ausführungsform des erfindungsgemäßen Nebenstromfilteraggregats;
- Figur 7: ein Blockschaltbild eines erfindungsgemäßen Nebenstromfilteraggregats; und
- Figur 8: ein Blockschaltbild einer alternativen Ausführungsform der Erfindung.

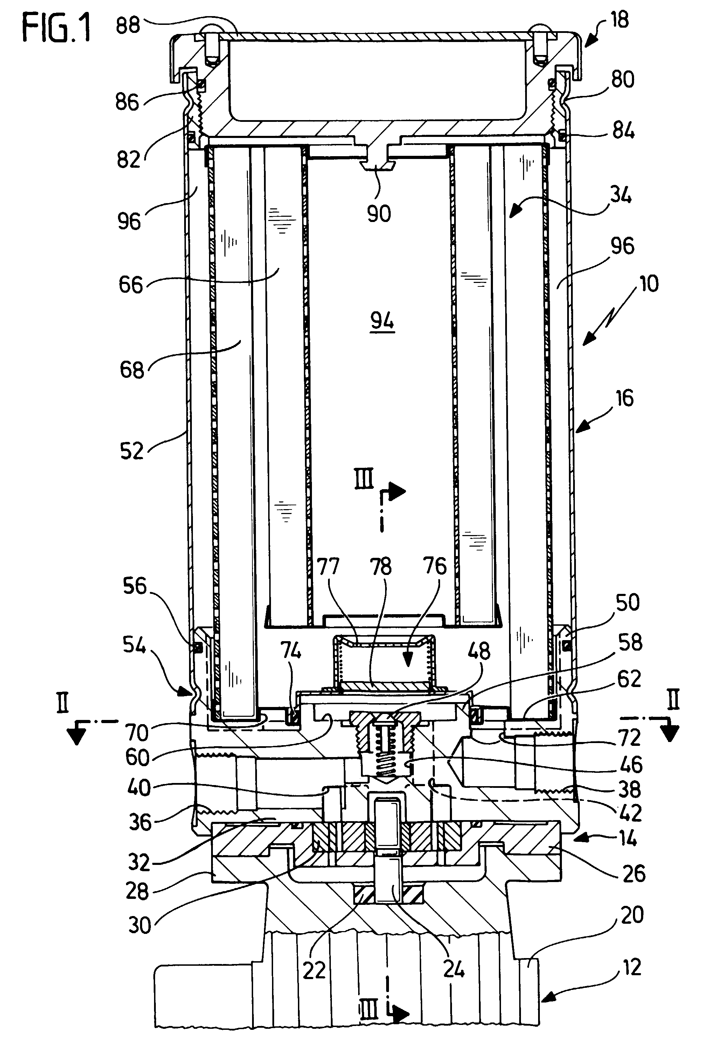

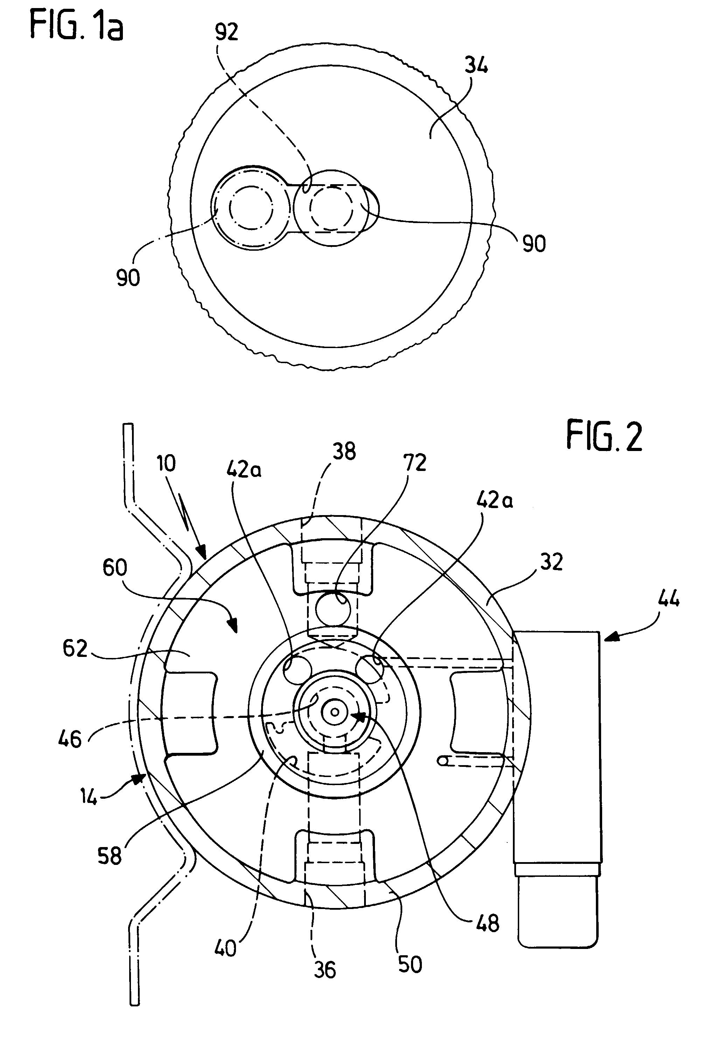

Figur 1 zeigt ein insgesamt mit dem Bezugszeichen 10 bezeichnetes Nebenstromfilteraggregat mit einem motorischen Antrieb 12, einer mit dem Antrieb verbundenen Pumpe 14, einem Filtergehäuse 16 und einem das Filtergehäuse 16 am offenen Ende verschließenden Deckel 18. Der motorische Antrieb oder Motor 12 umfaßt eine gegen das Motorengehäuse 20 mittels einer Radialdichtung 22 abgedichtete Motorwelle 24, welche aus dem Motorengehäuse 20 herausragt und sich bis in einen Pumpenblock 26 der Pumpe 14 fortsetzt. Der Pumpenblock der Pumpe 14 ist koaxial zu der Motorwelle 24 angeordnet und mit dem Motor 12 über einen Flansch 28 des Motorgehäuses 20 verbunden. Der Pumpenblock 26 bildet eine Aufnahmekammer für einen Zahnradsatz 30 der Zahnradpumpe 14. An der Oberseite wird der Pumpenblock 26 durch einen Boden 32 des Gehäuses 16 abgeschlossen, welches koaxial mit dem Motor und dem Pumpenblock 26 angeordnet und mit diesem befestigt ist.

Das dem Filtergehäuseboden 32 gegenüberliegende Ende des Filtergehäuses 16 ist mit dem Deckel 18 verschließbar. Nach Öffnen des Filtergehäuses 16 durch Entfernen des Deckels 18 kann ein im Innern des Filtergehäuses angeordnetes Filterelement 34 aus dem Filtergehäuse entfernt und gegen ein neues Filterelement ausgetauscht werden.

Bei dieser Ausführungsform der Erfindung ist ein separat gestalteter Pumpenblock 26 vorgesehen, der es erlaubt, den Rest des Nebenstromfilteraggregats, d.h. das Gehäuse 16 und die Pumpe 14, mit beliebigen Antrieben zu versehen, ohne daß die Konstruktion von Pumpe 14 und des Filtergehäuses 16 geändert werden muß. Einzige Voraussetzung für die zu verwendenden Antriebe ist, daß die Antriebswelle 24 in ausreichendem Maße aus dem Gehäuse 20 des Antriebsmotors herausragt und eine entsprechende Ausgestaltung zur Kopplung mit dem Zahnradsatz 30 aufweist. Die Anpassung des Pumpenblocks 26 an den Montageflansch 28 des Motorengehäuses 20 läßt sich relativ einfach durchführen, wenn nicht die Gestaltung des Flansches 28 seitens des Antriebsmotors vorgegeben werden kann.

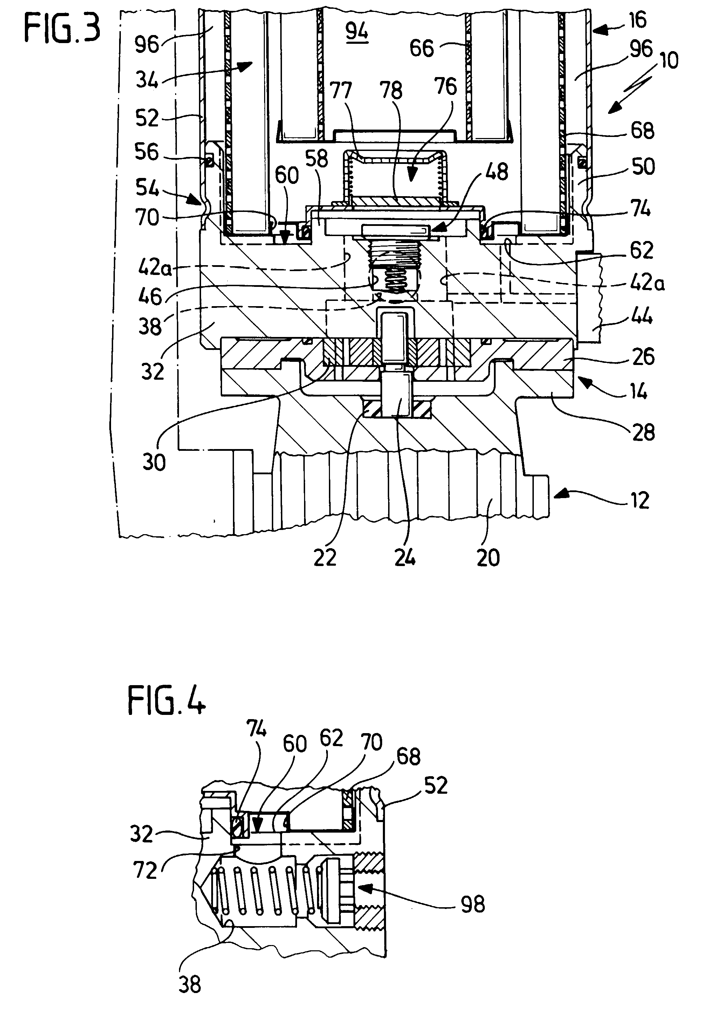

Das Filtergehäuse 16 mit seinem Filtergehäuseboden 32 schließt direkt an den Pumpenblock 26 an und beinhaltet im Filtergehäuseboden 32 eine Schmutzölansaugleitung 36 sowie eine Reinölablaufleitung 38. Der Schmutzölansaugleitung 36 ist über ein nierenförmiges Langloch 40 im Gehäuseboden 32 mit der Ansaugkammer des Pumpenblocks 26 verbunden, während ein parallel hierzu angeordnetes Langloch 42 über die Bohrungen 42a die Druckseite des Pumpenblocks 26 mit dem das Filterelement 34 aufnehmenden Volumen des Filtergehäuses 16 verbindet (vgl. Figuren 2 und 3).

Ferner sind in dem Gehäuseboden 32 Bohrungen vorgesehen, die eine Verbindung des Volumens innerhalb des Ringbundes 58 und der Reinölablaufleitung 38 zum Umfang des Gehäusebodens schaffen, wo ein Differenzdruckschalter 44 zur Überwachung des Belegungszustandes des Filterelements 34 angeordnet ist. Die Grundplatte 32 beinhaltet ferner eine sich zum Filtergehäuseinnern öffnende Bohrung 46, die mit ihrem anderen Ende in die Schmutzölansaugleitung 36 mündet. Die Bohrung 46 nimmt im zusammengebauten Zustand der Nebenstromfilteranlage 10 ein Rückschlagventil 48 auf, welches im Falle eines übermäßigen Druckanstiegs im Filtergehäuse öffnet und direkt eine Verbindung zu der Schmutzölansaugleitung 36 schafft, so daß im Falle eines verbrauchten Filterelements 34 ein Kurzschluß entsteht und die Pumpe direkt von der Reinölseite zur Schmutzölseite fördert (Zirkulation). So wird verhindert, daß Schmutzöl ungefiltert in den Hydraulikvorrat gelangt.

Die Oberseite des Gehäusebodens 32 trägt an ihrem Außenumfang einen nach oben abstehenden Rand 50, auf welchen eine Zylinderwandung 52 des Gehäuses 16 montiert wird. Die Zylinderwand 52 wird auf dem Rand 50 mechanisch über eine Sicke 54 gehalten und ist darüber hinaus in der Regel noch mit dem Rand 50 verklebt. Am freien Ende des Randes 50 ist darüber hinaus noch eine O-Ringdichtung 56 angeordnet, zur zusätzlichen Abdichtung zwischen Zylinderwand 52 und dem Rand 50 des Gehäusebodens 32. Der Filtergehäuseboden 32 weist ferner konzentrisch mit dem Rand 50 weiter innen liegend einen Ringbund 58 auf, dem radial nach außen benachbart eine Ringnut 60 folgt, welche von der nach oben weisenden Oberfläche 62 des Gehäusebodens 32 zurückspringt. Das Filterelement 34, das im vorliegenden Ausführungsbeispiel ein doppeltes Filterelement mit einer innen- und einer außenliegenden Filterkerze 66, 68 ist, stützt sich mit der unteren Abschlußfläche der äußeren Filterkerze 68 auf der Oberfläche 62 des Filterbodens 32 ab, und am gegenüberliegenden Ende liegt das Filterelement 34 an der Unterseite des Deckels 18 an.

So spannt der Deckel 18 im geschlossenen Zustand das Filterelement 34 zwischen sich und der Oberfläche 62 des Filtergehäusebodens 32 ein und entlastet so die Klebestellen des Filterelementes.

Das untere Ende des Filterelements 34 weist mittig einen nach innen rückspringenden Kanal 70 auf, welcher ungefähr konzentrisch mit der Ringnut 60 angeordnet ist und mit dieser zusammen einen Ringkanal bildet. Dieser Ringkanal ist über eine Vertikalbohrung 72 mit der Reinölablaufleitung 38 verbunden.

Innerhalb des Rücksprungs 70 umfaßt das untere Ende des Filterelementes 34 eine Nut zur Aufnahme eines O-Rings 74, welcher für einen dichtenden Kontakt des unteren Endes des Filterelementes 34 an der Außenfläche des Ringbundes 58 sorgt. Mittig und innerhalb des Ringbundes 58 angeordnet, umfaßt das Filterelement 34 an seinem dem Gehäuseboden 32 benachbart anzuordnenden Ende ein Rückschlagventil 76, welches im wesentlichen aus einer in einem Käfig 77 gehaltenen Dichtungsplatte 78 besteht. Dieses Rückschlagventil ist normalerweise geschlossen (vgl. der in Figur 1 gezeigte Zustand), so daß der Innenraum des Filterelementes 34 keine direkte Verbindung zu dem Volumen innerhalb des Ringbundes 58 des Gehäusebodens 32 aufweist.

Allerdings ist die Vorspannung des Rückschlagventils relativ gering, so daß es beim Einsetzen des Filterelementes 34 in das Gehäuse 16 des Nebenstromfilteraggregats 10 und bei einem ersten Kontakt mit restlichem Reinöl innerhalb des Filtergehäuses öffnet, so daß für das im Filtergehäuse verbliebene Reinöl das innere Volumen des neuen Filterelementes 34 zum Einströmen zur Verfügung steht, so daß dieses nicht in dem ansonsten nur geringen verbleibenden Volumen zwischen der Außenseite des Filterelementes 34 und der zylindrischen Wandung 52 hochsteigen muß. Damit wird vermieden, daß beim schnellen Einsetzen des Filterelementes 34 in das Filtergehäuse 16 Öl aus dem Nebenstromfilteraggregat 10 überschwappt und die Umgebung verunreinigt.

Am oberen Ende trägt die zylindrische Wandung 52 des Filtergehäuses 16, mechanisch gesichert über eine Sicke 80, einen Ring 82 mit einem Innengewinde, in das der Deckel 18 mit seinem komplementären Außengewinde einschraubbar ist. Der Ring 82 ist an seinem unteren, dem Gehäuseinneren zugewandten Ende über einen O-Ring 84 gegenüber der Zylinderwandung 52 abgedichtet. Der Deckel 18 selbst trägt am oberen Ende seines Außengewindes ebenfalls einen O-Ring 86, der die Deckelaußenwandung gegenüber dem Ring 82 abdichtet.

Der Deckel 18 schließlich weist eine bombierte Form auf, wobei über den an der Oberseite gebildeten Hohlraum eine Griffspange 88 befestigt ist, die das Drehen und Halten des Deckels 18 erleichtert. An seiner Unterseite trägt der Deckel 18 mittig einen nach unten abstehenden Nippel 90, der in eine entsprechende Öffnung an der Oberseite des Filterelementes 34 (vgl. Figur la) einrastbar einklinkbar ist, so daß der Deckel gleichzeitig als Handhabe für das Filterelement 34 verwendet werden kann.

Sobald der Deckel 18 zusammen mit dem Filterelement 34 aus dem Filtergehäuse 16 entnommen ist, kann der Nippel 90 in dem Langloch 92 zu dem erweiterten Teil hin verschoben werden und damit der Deckel von dem Filterelement 34 gelöst werden.

Im folgenden wird zunächst der Ölfluß beim Betrieb des Nebenstromfilteraggregates gemäß Figur 1 im Zusammenhang mit den Figuren 2 und 3 noch näher erläutert.

Das Schmutzöl tritt zunächst über die Schmutzölansaugleitung 36 in das Nebenstromfilteraggregat 10 ein und wird von der von dem Pumpenblock 26 gebildeten Druckkammer über den Zahnradsatz 30 und die Axialbohrungen 42a in den Ringraum innerhalb des Ringbundes 58 gefördert. Dort hebt das Schmutzöl die Dichtungsplatte 78 innerhalb des Käfigs 77 an und strömt so in das Innere des Filterelementes 34 ein. Dort tritt es durch die innere bzw. äußere Filterpatrone in den innenliegenden zylindrischen Raum 94 bzw. nach außen in den Ringraum 96 zwischen dem Filterelement 34 und der Zylinderwandung 52 ein und strömt aus dem Raum 94 über Kanäle zwischen dem Deckel 18 und dem oberen Ende des Filterelementes 34 gegebenenfalls in den Ringraum 96 und von dort in Richtung zum Gehäuseboden 32 über den aus dem Rücksprung 70 und der Ringnut 60 gebildeten Ringkanal über die Bohrung 72 in den Reinölauslaß 38.

Bildet sich aufgrund einer zu hohen Schmutzbelegung des Filterelementes 34 ein zu hoher Druck innerhalb des Volumens des Ringraumes 58, so öffnet das Rückschlagventil 48 und sorgt für einen Kurzschluß des Schmutzöls vor Eintritt in das Filterelement 34.

Um ein unnützes Betreiben des Nebenstromfilteraggregates zu vermeiden, wird der vorerwähnte Differenzdruckschalter 44 verwendet, der bei Überschreiten einer vorgegebenen Druckdifferenz zwischen Schmutzöl- und Reinölseite, was einer übermäßigen Auslastung des Filterelementes 34 entspricht, ein elektrisches Signal abgibt, das unter anderem auch dazu benutzt werden kann, das Nebenstromfilteraggregat still zu setzen.

Um zu verhindern, daß beim Wechsel des Filterelementes 34 aus einem höher gelegenen Tank Öl über die Reinölablaufleitung 38 in den Ringraum 96 zurückfließt und über das dann offene Behältnis 52 in die Umgebung austritt, wird, wie in Figur 4 ausschnittsweise gezeigt, in die Reinölablaufleitung ein Rückschlagventil 98 eingebaut, welches im drucklosen Zustand den Reinölauslaß nach innen hin schließt.

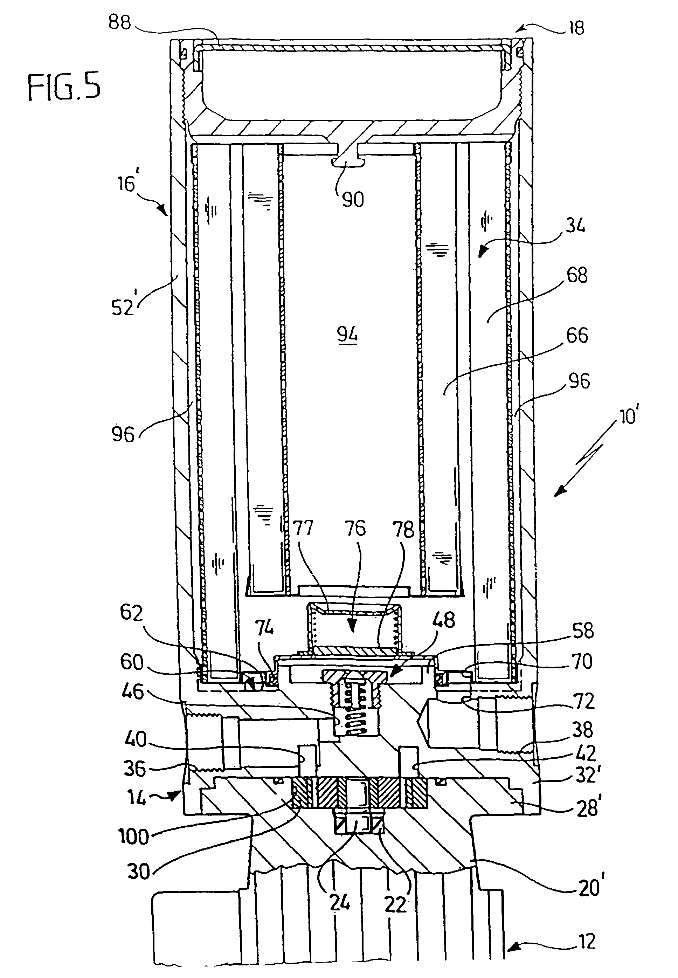

Figur 5 stellt eine zweite Ausführungsform der vorliegenden Erfindung dar, die vom funktionellen Aufbau her dem in Figur 1 gezeigten Nebenstromfilteraggregat entspricht, allerdings bei einem geänderten konstruktiven Aufbau.

In Figur 5 ist mit dem Motorengehäuse 20' unmittelbar ein Filtergehäuseboden 32' verbunden, welcher einstückig mit einer Zylinderwandung 52' eines Filtergehäuses 16' ausgebildet ist. Der innere Aufbau, insbesondere die Größendimensionierung und Lage der Bohrungen im Filtergehäuseboden 32', entspricht im wesentlichen dem des Filtergehäusebodens 32 der Figur 1, weshalb die dort angebrachten Funktionsteile und Funktionsbereiche mit denselben Bezugszeichen versehen sind wie in Figur 1.

Dasselbe gilt für das eingesetzte Filterelement und den Deckel 18.

Allerdings endet im Fall der Ausführungsform von Figur 5 das Motorgehäuse 20' mit einem gegebenenfalls einstückig hiermit ausgebildeten Flansch 28', welcher einen mittigen Rücksprung 100 umfaßt, welcher den Zahnradsatz 30 der Pumpe 14 aufnimmt. Bei dieser Ausbildungsform ist deshalb kein gesonderter Pumpenblock 26 vonnöten, und das Motorengehäuse 20' ist direkt mit dem Filtergehäuse 16' über dessen Filtergehäuseboden 32' verbunden.

Selbstverständlich kann bei dieser Ausführungsform ebenso wie bei der in Figur 1 gezeigten statt dem doppelten Filterelement 34 auch ein einfaches Filterelement verwendet werden, bei dem dann die innere Filterkerze 66 entfällt.

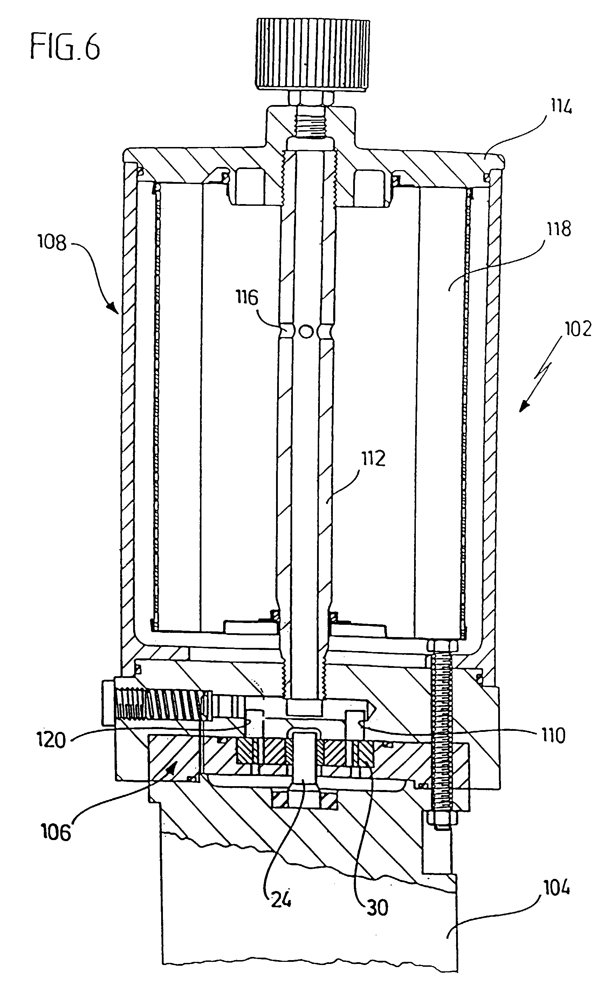

Figur 6 zeigt eine weitere alternative Ausführungsform der vorliegenden Erfindung, bei der ein Nebenstromfilteraggregat 102 mit einem Antriebsmotor 104, einer Pumpe 106 und einem Filtergehäuse 108 ausgerüstet ist, die ebenso wie die in den Figuren 1 und 5 gezeigten Ausführungsformen eine vertikale koaxiale Anordnung gegeneinander aufweisen.

Der Schmutzöleinlaß und der Reinölauslaß sind in der vorliegenden Darstellung nicht sichtbar. Von der Schmutzölseite gelangt das Öl zunächst über die Pumpe 106 und deren Druckseite 110 über eine mittige Bohrung des Bodens des Gehäuses 108 in eine Steigleitung 112, die sich vertikal bis zum oberen Ende des Gehäuses 108 erstreckt und mit einem das Gehäuse 108 oben verschließenden Deckel 114 über eine Schraubverbindung verbunden ist. Im oberen Drittel weist die Steigleitung 112 durchgehende Querbohrungen 116 auf, über die das Schmutzöl ins Innere eines Filterelementes 118 gelangt. Nach Durchtreten durch das Filterelement 118 sammelt sich das Reinöl in einem zylindrischen Raum zwischen dem Filterelement 118 und der Gehäusewandung des Gehäuses 108 und fließt über einen in der vorliegenden Darstellung nicht sichtbaren Reinölauslaß ab. Über die mit dem Deckel 114 verbundene Steigleitung 112 wird sichergestellt, daß im Filterelement 118 enthaltenes restliches Schmutzöl nicht unter Ablösung von Schmutzteilen zurück in das Gehäuse 108 fließen kann, wenn der Deckel 114 geöffnet und das Filterelement 118 ausgetauscht werden sollen. Das Filterelement stützt sich dichtend einerseits am Deckel 114 ab, andererseits an seinem unteren Teil an der Steigleitung 112. Die Steigleitung 112 kann gleichzeitig zur Befestigung des Deckels 114 an der Bodenplatte des Gehäuses 108 verwendet werden, indem diese mit einem Außengewinde an seinem unteren Ende versehen wird, welches komplementär ist zu einem Innengewinde einer dieses aufnehmenden Bohrung in der Bodenplatte des Gehäuses 108.

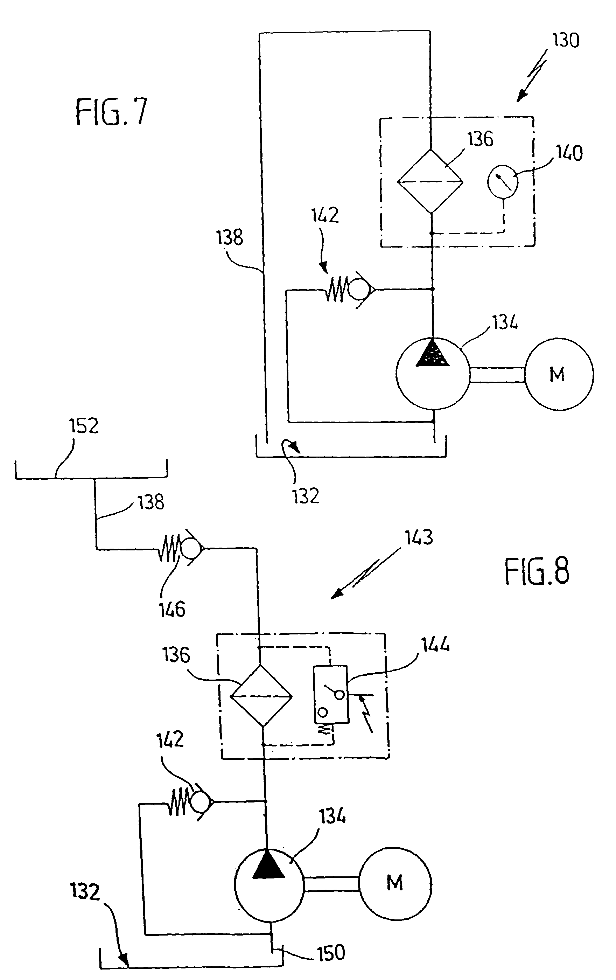

Schließlich seien anhand der Figuren 7 und 8 noch prinzipielle Möglichkeiten der Auslegung der Fließwege der Nebenstromfilteranlage gemäß vorliegender Erfindung dargestellt, wobei die einfachste Version in Figur 7 enthalten ist. Dort entnimmt ein Nebenstromfilteraggregat 130 Öl aus einem Ölvorrat 132 und pumpt dieses mittels einer Pumpe 134, einem Filterelement 136 über eine Rückflußleitung 138 zurück zum Ölvorrat 132. Den Beladungszustand des Filterelementes 136 kann man an einem Druckmeßgerät 140 ablesen, welches den eingangsseitigen Druck des Filterelementes 136 überwacht. Steigt der eingangsseitige Druck am Filterelement 136 über Normalwerte an, zeigt dies eine Erschöpfung des Filters und einen zu hohen Beladungsgrad des Filters an, so daß dieses ausgetauscht werden muß. Um eine Zerstörung des Filters und/oder eine Überlastung der Pumpe 134 in solchen Fällen zu vermeiden, ist ein Rückschlagventil 142 vorgesehen, welches die Ausgangsseite der Pumpe 134 mit der Eingangsseite 150 direkt verbindet. In einem solchen Fall führt also die Zirkulation des Schmutzöles von der Pumpenausgangsseite direkt zur Pumpeneingangsseite 150.

Figur 8 zeigt eine komplexere Schaltung, bei der für gleiche Elemente dieselben Bezugszeichen verwendet sind, wie in Figur 7.

Anstelle des Druckmeßgerätes 140 wird ein Differenzdruckmeßgerät 144 verwendet, welches die Druckdifferenz zwischen der Eingangs- und Ausgangsseite des Filterelementes 136 überwacht und im Falle des Überschreitens eines vorgegebenen Differenzdruckwertes ein elektrisches Signal abgibt, das unter anderem auch dazu benutzt werden kann, den Motor der Pumpe 134 still zu setzen. In der Rücklaufleitung 138 ist zusätzlich noch ein Rückschlagventil 146, das verhindert, daß Öl über die Rücklaufleitung 138 aus dem höher gelegenen Tank 152 in das Filterelement 136 zurückläuft.

## Patentansprüche

1. Nebenstromfilteraggregat, insbesondere zur Filterung von Hydraulikölvorräten, mit einer motorisch angetriebenen Pumpe (14) und einem fest montierten, mit einem Deckel (18) verschließbaren Filtergehäuse (16), welches ein auswechselbares Filterelement (34) beinhaltet, wobei der Antrieb (12) der Pumpe (14), die Pumpe (14) und das Filtergehäuse (16) koaxial und in vertikaler Richtung angeordnet sind, so daß das mit dem Deckel (18) verschließbare Ende des Filtergehäuses (16) nach oben weist, und wobei das Filtergehäuse (16) direkt mit der Pumpe (14) verbunden ist, dadurch gekennzeichnet, daß das Filterelement (34) von innen nach außen durchströmbar ist und eine Rückhaltevorrichtung (76;112) für das im Filterelement (34) beim Wechsel enthaltene Schmutzöl umfaßt und daß das Filtergehäuse (16) ein Aufnahmegefäß für das Reinöl beim Wechsel des Filterelementes (34) bildet.

2. Nebenstromfilteraggregat nach Anspruch 1, dadurch gekennzeichnet, daß die Pumpe (14) ein hydraulisches Förderelement (30) umfaßt, welches direkt auf der Motorwelle des Antriebs (12) befestigt ist.

3. Nebenstromfilteraggregat nach Anspruch 1 oder 2, dadurch gekennzeichnet, daß in das Pumpengehäuse der Pumpe (14) ein Ventilblock integriert ist.

4. Nebenstromfilteraggregat nach Anspruch 3, dadurch gekennzeichnet, daß das Pumpengehäuse in den Filtergehäuseboden (32) integriert ist.

5. Nebenstromfilteraggregat nach Anspruch 4, dadurch gekennzeichnet, daß das Filtergehäuse (16) direkt an einem Flansch (28') des Antriebs befestigt ist.

6. Nebenstromfilteraggregat nach einem der Ansprüche 1 bis 3, dadurch gekennzeichnet, daß das Pumpengehäuse in einem Flansch (28') des Antriebs (12) integriert ist, welcher der mechanischen Verbindung des Antriebs (12) mit dem Filtergehäuse (16') dient.

7. Nebenstromfilteraggregat nach einem der voranstehenden Ansprüche, dadurch gekennzeichnet, daß das Filtergehäuse (16) mit dem Filtergehäuseboden (32) einstückig ausgebildet ist.

8. Nebenstromfilteraggregat nach einem der Ansprüche 1 bis 3, dadurch gekennzeichnet, daß das Pumpengehäuse durch einen zwischen dem Antrieb (12) und dem Filtergehäuse (16) montierten Pumpenblock (26) gebildet wird.

9. Nebenstromfilteraggregat nach einem der voranstehenden Ansprüche, dadurch gekennzeichnet, daß der Filtergehäuseboden (32) einen Saug- und einen Druckanschluß beinhaltet.

10. Nebenstromfilteraggregat nach Anspruch 9, dadurch gekennzeichnet, daß die Rückhaltevorrichtung ein im Boden des Filterelements (34) angeordnetes Ventil (76) ist.

11. Nebenstromfilteraggregat nach Anspruch 10, dadurch gekennzeichnet, daß die Rückhaltevorrichtung eine im Filterelement (34) integrierte Steigleitung (112) ist.

12. Nebenstromfilteraggregat nach einem der voranstehenden Ansprüche, dadurch gekennzeichnet, daß das Filtergehäuse (16) mit einem in das dem Gehäuseboden (32) gegenüberliegende Ende des Gehäuses (16) eintauchenden Deckel (18) verschließbar ist.

13. Nebenstromfilteraggregat nach einem der voranstehenden Ansprüche, dadurch gekennzeichnet, daß der Deckel (18) mit einem Halteelement (90) für das Filterelement (34) versehen ist.

14. Nebenstromfilteraggregat nach Anspruch 13, dadurch gekennzeichnet, daß das Halteelement (90) abdichtend am Filtergehäuse (16) anliegt.

15. Nebenstromfilteraggregat nach Anspruch 13 oder 14, dadurch gekennzeichnet, daß das Halteelement (90) in eine Verengung des Filtergehäuses einrückbar ist.

16. Nebenstromfilteraggregat nach einem der voranstehenden Ansprüche, dadurch gekennzeichnet, daß der Deckel (18) bombiert ist.

17. Nebenstromfilteraggregat nach Anspruch 16, dadurch gekennzeichnet, daß der Deckel (18) einen in einen Rücksprung integrierten Griff (88) umfaßt.

18. Nebenstromfilteraggregat nach einem der voranstehenden Ansprüche, dadurch gekennzeichnet, daß der Deckel (18) ein Außengewinde umfaßt, welches in ein komplementäres Innengewinde des Filtergehäuses (16) einschraubbar ist.

19. Nebenstromfilteraggregat nach einem der voranstehenden Ansprüche, dadurch gekennzeichnet, daß der Deckel (18) oder das Filtergehäuse (16) ein Sperrelement umfassen, welches lediglich ein verlangsamtes Zurücklegen des letzten Teils des Schließwegs des Deckels (18) erlaubt.

20. Nebenstromfilteraggregat nach einem der voranstehenden Ansprüche, dadurch gekennzeichnet, daß das Filterelement (34) ein gering federbelastetes Ventil (76) umfaßt, welches bei geringem Staudruck auf der Reinölseite beim Einsetzen des Filterelementes (34) öffnet und einen Durchtritt von der Reinölseite des Filterelementes (34) zu seiner Schmutzölseite schafft.

21. Nebenstromfilteraggregat nach einem der voranstehenden Ansprüche, dadurch gekennzeichnet, daß das Nebenstromfilteraggregat (10) eine Reinölablaufleitung (38) umfaßt mit einem Rückschlagventil (98), welches vorzugsweise in den Filtergehäuseboden (32) integriert ist.

22. Nebenstromfilteraggregat nach einem der voranstehenden Ansprüche, dadurch gekennzeichnet, daß der Filtergehäuseboden (32) einen Anschluß für ein Manometer (140) umfaßt, welches mit der Schmutzölseite in Fließverbindung steht.

23. Nebenstromfilteraggregat nach einem der voranstehenden Ansprüche, dadurch gekennzeichnet, daß ein Differenzdruckschalter (44; 144) vorhanden ist, welcher beim Überschreiten eines vorgegebenen Differenzdruckwertes elektrische Signale abgibt.

24. Nebenstromfilteraggregat nach einem der voranstehenden Ansprüche, dadurch gekennzeichnet, daß das Filterelement gegen das Filtergehäuse mittels Radialdichtungen (56) dichtend anliegt.

## Claims

1. Bypass-flow filter assembly, in particular for filtering hydraulic oil supplies, with a motor-driven pump (14) and a rigidly mounted filter housing (16) which can be closed by means of a cover (18) and contains an exchangeable filter element (34), the drive (12) of the pump (14), the pump (14) and the filter housing (16) being arranged coaxially and in a vertical direction, such that that end of the filter housing (16) which can be closed by means of the cover (18) is turned upwards, and the filter housing (16) being connected directly to the pump (14), characterised in that the filter element (34) allows flow from the inside outwards and comprises a device (76; 112) for retaining the dirty oil contained in the filter element (34) during exchange, and in that the filter housing (16) forms a vessel for holding the clean oil during the exchange of the filter element (34).

2. Bypass-flow filter assembly according to Claim 1, characterised in that the pump (14) comprises a hydraulic displacement element (30), which is secured directly on the motor shaft of the drive (12).

3. Bypass-flow filter assembly according to Claim 1 or 2, characterised in that a valve block is integrated into the casing of the pump (14).

4. Bypass-flow filter assembly according to Claim 3, characterised in that the pump casing is integrated into the filter-housing base (32).

5. Bypass-flow filter assembly according to Claim 4, characterised in that the filter housing (16) is secured directly on a flange (28') of the drive.

6. Bypass-flow filter assembly according to one of Claims 1 to 3, characterised in that the pump casing is integrated into a flange (28') of the drive (12), which serves to couple the drive (12) mechanically to the filter housing (16').

7. Bypass-flow filter assembly according to one of the preceding claims, characterised in that the filter housing (16) is of one-piece construction with the filter-housing base (32).

8. Bypass-flow filter assembly according to one of Claims 1 to 3, characterised in that the pump casing is formed by a pump block (26) mounted between the drive (12) and the filter housing (16).

9. Bypass-flow filter assembly according to one of the preceding claims, characterised in that the filter-housing base (32) contains an intake and a delivery connection.

10. Bypass-flow filter assembly according to Claim 9, characterised in that the retention device is a valve (76) arranged in the base of the filter element (34).

11. Bypass-flow filter assembly according to Claim 10, characterised in that the retention device is a riser line (112) integrated into the filter element (34).

12. Bypass-flow filter assembly according to one of the preceding claims, characterised in that the filter housing (16) can be closed by means of a cover (18) inserted into the opposite end of the housing (16) from the housing base (32).

13. Bypass-flow filter assembly according to one of the preceding claims, characterised in that the cover (18) is provided with a holding element (90) for the filter element (34).

14. Bypass-flow filter assembly according to Claim 13, characterised in that the holding element (90) rests against the filter housing (16) in the manner of a seal.

15. Bypass-flow filter assembly according to Claim 13 or 14, characterised in that the holding element (90) can be engaged into a narrowed portion of the filter housing.

16. Bypass-flow filter assembly according to one of the preceding claims, characterised in that the cover (18) is concave.

17. Bypass-flow filter assembly according to Claim 16, characterised in that the cover (18) comprises a handle (88) integrated into a recess.

18. Bypass-flow filter assembly according to one of the preceding claims, characterised in that the cover (18) has an external thread which can be screwed into a complementary internal thread on the filter housing (16).

19. Bypass-flow filter assembly according to one of the preceding claims, characterised in that the cover (18) or the filter housing (16) comprises a locking element which allows the last part of the closing path of the cover (18) to be travelled only at a reduced speed.

20. Bypass-flow filter assembly according to one of the preceding claims, characterised in that the filter element (34) comprises a lightly spring-loaded valve (76) which opens if there is a slight back pressure on the clean-oil side as the filter element (34) is inserted and creates a passage from the clean-oil side of the filter element (34) to its dirty-oil side.

21. Bypass-flow filter assembly according to one of the preceding claims, characterised in that the bypass-flow filter assembly (10) has a clean-oil outlet line (38) with a non-return valve (98), which is preferably integrated into the filter-housing base (32).

22. Bypass-flow filter assembly according to one of the preceding claims, characterised in that the filter-housing base (32) comprises a connection for a manometer (140), which is coupled to the fluid on the dirty-oil side.

23. Bypass-flow filter assembly according to one of the preceding claims, characterised in that there is a differential-pressure switch (44; 144) which sends out electrical signals if a predetermined differential-pressure value is exceeded.

24. Bypass-flow filter assembly according to one of the preceding claims, characterised in that the filter element rests against the filter housing and is sealed with respect to the latter by means of radial seals (56).

## Revendications

1. Ensemble filtre monté en dérivation, en particulier pour la filtration de réserves d'huile hydraulique, comprenant une pompe (14) entraînée par moteur et un boîtier de filtre (16) monté fixe qui peut être fermé par un couvercle (18) et qui renferme un élément filtrant interchangeable (34), l'entraînement (12) de la pompe (14), la pompe (14) et le boîtier de filtre (16) étant disposés coaxialement et dans la direction verticale, de manière que l'extrémité du boîtier de filtre (16) qui peut être fermée par le couvercle (18) soit dirigée vers le haut, et le boîtier de filtre (16) étant raccordé directement à la pompe (14), caractérisé en ce que l'élément filtrant (34) peut être traversé par le courant de l'intérieur vers l'extérieur et comprend un dispositif de retenue (76 ; 112) pour l'huile sale qui est contenue dans l'élément filtrant (34) lors du remplacement de celui-ci, et en ce que le boîtier de filtre (16) forme un récipient récepteur pour l'huile propre lors du remplacement de l'élément filtrant (34).

2. Ensemble filtre monté en dérivation selon la revendication 1, caractérisé en ce que la pompe (14) comprend un élément de refoulement hydraulique (30) qui est fixé directement sur l'arbre moteur de l'entraînement (12).

3. Ensemble filtre monté en dérivation selon la revendication 1 ou 2, caractérisé en ce qu'un bloc de soupape est intégré dans le corps de pompe de la pompe (14).

4. Ensemble filtre monté en dérivation selon la revendication 3, caractérisé en ce que le corps de pompe est intégré dans le fond (32) du boîtier de filtre.

5. Ensemble filtre monté en dérivation selon la revendication 4, caractérisé en ce que le boîtier de filtre (16) est fixé directement sur une bride (28') de l'entraînement.

6. Ensemble filtre monté en dérivation selon une des revendications 1 à 3, caractérisé en ce que le boîtier de pompe est intégré dans une bride (28') de l'entraînement (12), laquelle sert à l'assemblage mécanique de l'entraînement (12) avec le boîtier de filtre (16').

7. Ensemble filtre monté en dérivation selon une des revendications précédentes, caractérisé en ce que le boîtier de filtre (16) est réalisé en une seule pièce avec le fond (32) du boîtier de filtre.

8. Ensemble filtre monté en dérivation selon une des revendications 1 à 3, caractérisé en ce que le boîtier de pompe est formé d'un bloc de pompe (26) monté entre l'entraînement (12) et le boîtier de filtre (16).

9. Ensemble filtre monté en dérivation selon une des revendications précédentes, caractérisé en ce que le fond (32) du boîtier de filtre comprend un raccord d'aspiration et un raccord de pression.

10. Ensemble filtre monté en dérivation selon la revendication 9, caractérisé en ce que le dispositif de retenue est une soupape (76) agencée dans le fond de l'élément filtrant (34).

11. Ensemble filtre monté en dérivation selon la revendication 10, caractérisé en ce que le dispositif de retenue est une conduite montante (112) intégrée dans l'élément filtrant (34).

12. Ensemble filtre monté en dérivation selon une des revendications précédentes, caractérisé en ce que le boîtier de filtre (16) peut être fermé au moyen d'un couvercle (18) qui s'emboîte dans l'extrémité du boîtier (16) qui est à l'opposé du fond (32) du boîtier.

13. Ensemble filtre monté en dérivation selon une des revendications précédentes, caractérisé en ce que le couvercle (18) est muni d'un élément de maintien (90) pour l'élément filtrant (34).

14. Ensemble filtre monté en dérivation selon la revendication 13, caractérisé en ce que l'élément de maintien (90) est appliqué à joint étanche contre le boîtier de filtre (16).

15. Ensemble filtre monté en dérivation selon la revendication 13 ou 14, caractérisé en ce que l'élément de maintien (90) peut être encastré dans un rétrécissement du boîtier de filtre.

16. Ensemble filtre monté en dérivation selon une des revendications précédentes, caractérisé en ce que le couvercle (18) est bombé.

17. Ensemble filtre monté en dérivation selon la revendication 16, caractérisé en ce que le couvercle (18) comprend une poignée (88) intégrée dans un chambrage.

18. Ensemble filtre monté en dérivation selon une des revendications précédentes, caractérisé en ce que le couvercle (18) comprend un filetage extérieur qui peut se visser dans un filetage intérieur complémentaire du boîtier de filtre (16).

19. Ensemble filtre monté en dérivation selon une des revendications précédentes, caractérisé en ce que le couvercle (18) ou le boîtier de filtre (16) comprend un élément d'arrêt qui ne permet de parcourir la dernière partie du trajet de fermeture du couvercle (18) que dans un mouvement ralenti.

20. Ensemble filtre monté en dérivation selon une des revendications précédentes, caractérisé en ce que l'élément filtrant (34) comprend une soupape (76) sollicitée légèrement par un ressort et qui, en présence d'une faible pression dynamique sur le côté huile propre lors de la mise en place de l'élément filtrant (34) , s'ouvre et crée un passage de traversée allant du côté huile propre de l'élément filtrant (34) à son côté huile sale.

21. Ensemble filtre monté en dérivation selon une des revendications précédentes, caractérisé en ce que ledit ensemble filtre monté en dérivation (10) comprend une conduite (38) d'écoulement de l'huile propre munie d'un clapet anti-retour (98), lequel est de préférence intégré dans le fond (32) du boîtier de filtre.

22. Ensemble filtre monté en dérivation selon une des revendications précédentes, caractérisé en ce que le fond (32) du boîtier de filtre comprend un raccord pour un manomètre (140) qui est en communication fluidique avec le côté huile sale.

23. Ensemble filtre monté en dérivation selon une des revendications précédentes, caractérisé en ce qu'il est prévu un interrupteur à pression différentielle (44 ; 144) qui émet des signaux électriques lorsqu'on passe au-desssus d'une valeur prédéterminée de pression différentielle.

24. Ensemble filtre monté en dérivation selon une des revendications précédentes, caractérisé en ce que l'élément filtrant est appliqué à joint étanche contre le boîtier de filtre au moyen de joints radiaux (56).
